Europäisches Patentamt

European Patent Office

Office européen des brevets

(19)

(11) Numéro de publication : **0 484 233 B1**

(12)

# FASCICULE DE BREVET EUROPEEN

(45) Date de publication du fascicule du brevet :
04.05.94 Bulletin 94/18

(51) Int. Cl.⁵ : **B01J 20/02,** B01D 53/34

(21) Numéro de dépôt : **91402902.0**

(22) Date de dépôt : **29.10.91**

(54) **Procédé de préparation d'une masse solide de captation de mercure.**

(30) Priorité : **30.10.90 FR 9013597**

(43) Date de publication de la demande :
**06.05.92 Bulletin 92/19**

(45) Mention de la délivrance du brevet :
**04.05.94 Bulletin 94/18**

(84) Etats contractants désignés :
**DE ES GB IT NL SE**

(56) Documents cités :
**EP-A- 0 107 582**
**US-A- 4 094 777**
**US-A- 4 222 897**

(73) Titulaire : **INSTITUT FRANCAIS DU PETROLE**
**4, avenue de Bois Préau**
**F-92502 Rueil-Malmaison (FR)**
Titulaire : **EUROPEENNE DE RETRAITEMENT**
**DE CATALYSEURS (en abrégé EURECAT)**
**Quai Jean Jaurès - Boite Postale 45**
**F-07800 LA VOULTE SUR RHONE (FR)**

(72) Inventeur : **Cameron, Charles**
**118, rue d'Assas**
**F-75006 Paris (FR)**
Inventeur : **Courty, Philippe**
**91, rue Condorcet**
**F-78800 Houilles (FR)**
Inventeur : **Berrebi, Georges**
**17, rue Barnave**
**F-26500 Bourg Les Valences (FR)**
Inventeur : **Roumieu, Raymond**
**24, Faubourg Saint Jacques**
**F-26000 Valence (FR)**
Inventeur : **Rabehasaina, Hans**
**32 Lot les Bartavelles**
**F-26270 Loriol Sur Drome (FR)**
Inventeur : **Eschard, François**
**61 Boulevard d'Angleterre**
**F-78110 Le Vesinet (FR)**

(74) Mandataire : **Andreeff, François et al**
**INSTITUT FRANCAIS DU PETROLE 4, avenue**
**de Bois-Préau**
**F-92502 Rueil-Malmaison (FR)**

Jouve, 18, rue Saint-Denis, 75001 PARIS

## Description

La présente invention concerne un procédé de préparation d'une masse solide de captation de mercure . Cette masse solide de captation du mercure contient un support ou dispersant minéral solide, du cuivre et du soufre combinés au moins en partie sous forme de sulfure de cuivre.

La présente invention a également pour objet un procédé de préparation d'un précurseur d'une masse solide de captation du mercure, ainsi que le précurseur obtenu par ledit procédé.

Les masses solides de la présente invention peuvent être dénommées indifféremment : masses d'absorption, de captation, d'extraction ou de piégeage.

Le brevet US-A-4094777 décrit un procédé de préparation de masse de captation du mercure comprenant l'incorporation d'un composé du cuivre à un support minéral, suivie d'une sulfuration à une température inférieure à 300°C.

La sulfuration selon le procédé décrit dans ce brevet est effectuée à l'aide d'un agent gazeux, par exemple le sulfure d'hydrogène, ou d'une solution d'un sulfure minéral dans l'eau ou dans un solvant organique, par exemple une solution aqueuse de sulfure de sodium, de sulfure de potassium ou de sulfure d'ammonium.

Les masses obtenues présentent une activité élevée et sont relativement peu coûteuses. Cependant la préparation de ces masses de captation présente plusieurs inconvénients importants.

Ainsi, lorsque la sulfuration est effectuée à l'aide de sulfure d'hydrogène ($H_2S$) gazeux, l'obtention d'une masse de captation, ayant une activité suffisante nécessite usuellement de travailler à des températures élevées, par exemple de l'ordre de 200°C, ce qui est très pénalisant. De plus $H_2S$ est un produit toxique et malodorant.

L'utilisation de solution de sulfure, par exemple de solution aqueuse de sulfure d'ammonium, permet de travailler à une température relativement basse par exemple entre zéro et cent degrés Celsius. Cependant, le sulfure d'ammonium est un composé toxique et facilement décomposable, ce qui complique son utilisation.

L'utilisation d'autres sulfures (de sodium...) amène des cations supplémentaires dans la masse, ce qui est désavantageux.

Selon la demande de brevet EP-A-107582, une masse de captation de mercure est préparée par imprégnation d'un support à l'aide d'une solution organique de soufre élémentaire ou une solution aqueuse d'un composé du soufre décomposable en soufre élémentaire à une température inférieure à 150°C.

Après séchage et volatilisation du composé organique, ou après la décomposition ci-dessus, on obtient un support avec une dispersion de soufre à l'état libre non fondu.

Le brevet US-4,474,896 décrit une masse de captation de mercure obtenue par mise en contact d'un support imprégné d'un cation métallique capable de former un polysulfure insoluble, avec un mélange de polysulfure et de sulfure.

Dans les essais décrits, des supports $CaCl_2$ traités par du soufre élémentaire ont été préparés. Les résultats obtenus dans le traitement de fluides chargés en mercure sont mauvais : il y a des quantités de mercure trop importants dans les effluents.

Il a maintenant été découvert que l'on peut obtenir une masse solide de captation du mercure à base de sulfure de cuivre ayant une bonne efficacité, une durée de vie améliorée et un coût de fabrication plus faible, ladite masse étant obtenue par traitement d'un support chargé en oxyde de cuivre avec du soufre élémentaire, puis activation.

De façon plus précise, le procédé de préparation d'une masse solide de captation du mercure de la présente invention comprend les étapes suivantes :

a/ on incorpore au moins un composé de cuivre, autre qu'un sulfure, à un support ou dispersant minéral solide,

b/ dans l'hypothèse où ledit composé n'est pas un oxyde de cuivre, on calcine, le produit obtenu à l'étape (a) de manière à transformer au moins en partie le ou les composés de cuivre qu'il contient en oxyde de cuivre, (CuO et/ou $Cu_2O$),

c/ on met en contact le produit obtenu à l'étape (b), ou à l'étape (a) s'il n'y a pas eu d'étape (b), avec du soufre élémentaire.

d/ on soumet le produit obtenu à l'étape (c) à un traitement thermique en atmosphère non oxydante, sous balayage de gaz, à une température et pendant un temps suffisants pour permettre la formation de sulfure du ou des métaux présents.

Les supports ou dispersants minéraux solides sont habituellement choisis dans le groupe formé par le charbon, le charbon actif, le coke, la silice, le carbure de silicium, le gel de silice, les silicates synthétiques ou naturels, les argiles, les terres à diatomées, les terres à foulon, le kaolin, la bauxite, les oxydes inorganiques réfractaires tels que par exemple l'alumine, l'oxyde de titane, la zircone, la magnésie, les silices-alumines, les silices-magnésies et les silices-zircones, les mélanges alumines-oxyde de bore, les aluminates, les silico-aluminates, les alumino-silicates zéolitiques cristallins, synthétiques ou naturels, par exemple les mordénites, les faujasites, les offrétites, les érionites, les ferriérites, les zéolites ZSM5 et ZSM11, les mazzites, et les ciments tels que par exemple ceux de type Secar produits par la société Lafarge.

On utilise de préférence un support choisi dans le groupe formé par le charbon, le charbon actif, le coke, la silice, les alumines, les silices-alumines, les silicates, les aluminates et les silico-aluminates (zéolitiques par exemple).

De façon avantageuse le support est choisi dans le groupe formé par la silice, les alumines, les silices-alumines, les silicates, les aluminates et les silico-aluminates et on utilise très avantageusement l'alumine.

Lorsque les masses de captation du mercure sont destinées à être utilisées dans le traitement de charges contenant des hydrocarbures condensables (par exemple C4 ou supérieur à C4) à une température située dans la gamme de température à laquelle s'effectue la captation, on a constaté que les masses ayant un diamètre moyen de pores au moins égal à 100 Angströms ($10^{-8}$m) présentent une stabilité accrue.

Les conditions d'obtention de masses (ou de supports destinés à fabriquer ces masses) présentant un diamètre moyen de pores d'au moins 100 Angströms ($10^{-8}$m) sont suffisamment bien connues de l'Homme du métier pour ne pas être répétées ici, dans le cadre de la présente invention (voir par exemple US-A-4094777).

Les supports préférés ont habituellement une surface spécifique d'environ 20 à 300 $m^2$ x $g^{-1}$, ces valeurs n'étant pas limitatives.

L'incorporation d'un composé de cuivre, autre qu'un sulfure, à un support ou dispersant minéral solide peut être effectuée par toutes méthodes connues de l'Homme de métier, par exemple par mélange avec un composé de cuivre ou par imprégnation à l'aide d'une solution d'un composé de cuivre. Les composés de cuivre que l'on emploie habituellement sont des composés facilement transformables en oxyde de cuivre à des températures relativement basses.

Comme exemple de composé de cuivre on peut citer à titre non limitatif : les oxydes de cuivre ; l'hydroxyde de cuivre $Cu(OH)_2$; les sels basiques de cuivre, en particulier les carbonates de formules $CuCO_3$, $Cu(OH)_2$ et $2CuCO_3$, $Cu(OH)_2$; les sels et les complexes organiques du cuivre tels que les sels des acides carboxyliques, par exemple les formiates, les acétates, les tartrates, les citrates, les benzoates, les oxalates, les malonates, les succinates, les glycolates, les lactates et l'acétylacetonate et le nitrate de cuivre.

On préfère habituellement introduire le composé de cuivre par imprégnation du support à l'aide d'une solution aqueuse ou organique d'un composé de cuivre et de préférence à l'aide d'une solution aqueuse d'un composé de cuivre. On utilise avantageusement une solution aqueuse de nitrate de cuivre.

On peut éventuellement introduire sur le support une faible proportion d'un composé soluble d'argent. La quantité d'argent introduite sur le support exprimée en poids d'argent par rapport au support représente habituellement de 0 à 5% en poids. D'autres métaux peuvent également être éventuellement présents, par exemple le fer.

Le support ou dispersant minéral solide comprenant un composé de cuivre, autre qu'un sulfure, est ensuite éventuellement calciné de manière à transformer, au moins en partie, le composé de cuivre en oxyde de cuivre. Lorsque dans l'étape (a) d'introduction d'un composé de cuivre, on a mélangé par exemple un oxyde de cuivre au support ou dispersant minéral solide, cette étape de calcination n'est pas nécessaire.

Au cours de cette étape de calcination, les conditions opératoires sont de préférence choisies de manière à transformer au moins en majeure partie, c'est-à-dire au moins 50%, et de préférence au moins 80% et très avantageusement 100% du composé de cuivre présent en oxyde de cuivre (CuO). La demanderesse a en effet constaté que le cuivre est particulièrement bien fixé sous forme d'oxyde de cuivre. La calcination peut être effectuée en atmosphère neutre ou oxydante. On peut ainsi opérer en présence d'un gaz inerte tel que l'azote, l'argon, l'hélium ou un mélange de ces gaz. On peut également opérer en présence d'un mélange d'oxygène et de gaz inerte contenant par exemple de 1 à 60% en poids d'oxygène ou même en présence d'oxygène sensiblement pur.

La calcination est de préférence effectuée en atmosphère oxydante et on utilise avantageusement de l'air, mais il est également possible d'employer de l'air enrichi en oxygène.

La température de calcination est habituellement d'environ 200 à environ 1000°C et de préférence d'environ 300 à environ 800°C et avantageusement d'environ 350 à environ 600°C.

La calcination peut être effectuée en atmosphère statique ou sous courant de gaz. On préfère habituellement opérer sous courant de gaz, et on emploie avantageusement un courant d'air. La vitesse spatiale horaire (VVH) exprimée en volume de gaz par volume de masse de captation et par heure est habituellement d'environ 100 à environ 20000 $h^{-1}$ et de préférence d'environ 100 à 10000 $h^{-1}$ et souvent d'environ 300 à 5000 $h^{-1}$.

La durée de cette étape de calcination est habituellement d'environ 0,5 heure à environ 24 heures et de préférence d'environ 0,5 heure à environ 12 heures et avantageusement d'environ 1 h à environ 10 heures.

Le produit contenant habituellement de l'oxyde de cuivre provenant de l'étape (a) ou de l'étape (b) de calcination est ensuite mis en présence de soufre élémentaire, au moins pour partie sous forme d'une solution organique ou encore sous forme de soufre solide ou encore sous forme vapeur, le soufre se condensant sur le support au cours du traitement thermique; le produit résultant de cette incorporation (étape (c)) constitue le précurseur de la masse de captation du mercure de la présente invention.

Comme solution organique de soufre, on peut notamment mettre en oeuvre des particules de soufre à l'état natif ou en fleur dont le diamètre moyen est par exemple inférieur à 20 microns et de préférence compris entre 0,01 et 10 microns en solution au moins pour partie et éventuellement aussi en suspension dans un composé organique dont la température d'ébullition est inférieure à 250 °C comme par exemple : le toluène, le benzène, l'alcool méthylique, l'acétone, le sulfure de carbone ou tout autre composé organique connu de l'Homme de métier où le soufre est soluble et par exemple, une essence légère bouillant entre environ 60 et 95 °C, une essence de type hexane bouillant entre environ 63 et 68°C, une essence dite de type F bouillant entre environ 100 et 160°C (et renfermant en volume 10 à 20% d'hydrocarbures aromatiques) et une essence du type "White Spirit" bouillant entre environ 150 et 250°C (et renfermant en volume 14 à 22% d'hydrocarbures aromatiques).

On imprègne le support avec ladite solution organique, la quantité totale de soufre étant introduite en une, ou éventuellement plusieurs opérations d'imprégnation avec séchage intermédiaire à une température inférieure à 150°C. Il est nécessaire d'opérer cette ou ces imprégnation(s) en évitant la cristallisation prématurée du soufre sur le support du fait notamment d'une trop grande différence de température entre le support et la solution organique d'imprégnation. Pour atteindre cet objectif, il peut s'avérer avantageux de chauffer préalablement le support à la même température que la solution d'imprégnation.

L'objectif étant de transformer l'oxyde de cuivre au moins en partie en sulfure de cuivre, donc de réduire le soufre élémentaire en S$^{--}$, on a également découvert que cet objectif peut être amélioré en ajoutant à ladite solution au moins un composé réducteur choisi par exemple dans le groupe formé par l'hydrogène, le formaldéhyde, l'acétaldéhyde, l'acide formique, l'hydrazine etc.

La quantité de soufre que l'on incorpore à la masse d'absorption est convenablement choisie pour permettre ultérieurement la transformation des composés de cuivre contenus dans ladite masse au moins en partie en sulfure de cuivre. La quantité de soufre peut facilement être ajustée en fonction de la quantité et de la stoechiométrie de sulfure de cuivre que l'on désire obtenir.

Il est habituellement souhaitable de transformer la totalité des composés de cuivre présents dans la masse d'absorption en sulfure de cuivre et donc d'employer une quantité de soufre calculée en atomes de soufre, au moins stoechiométrique, par rapport au cuivre, ou à l'ensemble cuivre et autres métaux présents, notamment argent, calculés en atomes de métal et ce, pour leur valence stable la plus élevée, par exemple Cu$^{2+}$, Fe$^{3+}$, Ag$^{+}$.

La quantité de soufre employée, calculée en atomes est avantageusement telle que le rapport atomique soufre sur métaux actifs présents dans la masse, soit d'environ 0,8:1 à 2:1 et de préférence d'environ 0,9:1 à 1,7:1. Par métaux actifs, on entend ceux qui captent le mercure, par exemple cuivre, argent, fer... Il est possible d'introduire également par exemple, de l'argent sur ladite masse, notamment par incorporation d'un composé d'argent au cours de l'étape (a) du procédé.

Le précurseur résultant de l'étape (c) décrite ci-dessus est alors soumis dans une étape (d) dite d'activation à un traitement thermique en atmosphère non oxydante, par exemple neutre ou réductrice et de préférence neutre, sous balayage de gaz, à une température et pendant un temps suffisants pour permettre la formation de sulfure du ou des métaux présents.

Ce traitement thermique est habituellement effectué sous courant de gaz inerte, par exemple d'azote, d'argon, d'hélium, ou un mélange de deux ou plusieurs de ces gaz, ou encore de la vapeur d'eau en proportion inférieure à 10% vol préférentiellement inférieure à 5% vol et très préférentiellement inférieure à 1% volume. On peut ajouter au dit gaz, 1 à 5% (volume) d'un composé réducteur choisi par exemple dans le groupe formé par l'hydrogène, le formaldéhyde, l'acétaldéhyde, l'acide formique, l'hydrogène etc... Lorsque de la vapeur d'eau est présente, il peut être avantageux d'ajouter de l'hydrogène par exemple, avec un rapport H$_2$/H$_2$O supérieur à 0,1% (volume).

Dans une forme préférée de réalisation de ce traitement, la masse d'absorption contenant le soufre et l'oxyde de cuivre est traitée sous un courant de gaz inerte, à une température d'environ 100 à environ 250°C, de préférence environ 120 à 230°C et souvent d'environ 130 à 220°C, avec une vitesse spatiale horaire (VVH) exprimée en volume de gaz par volume de masse de captation et par heure d'environ 100 à 10000 h$^{-1}$, de préférence d'environ 300 à 5000 h$^{-1}$ et souvent d'environ 500 à 2000 h$^{-1}$. La durée de ce traitement sous balayage de gaz est habituellement d'environ 1/2 heure à environ 24 heures et de préférence d'environ 1/2 heure à environ 10 heures, une durée d'environ 2 heures étant habituellement suffisante.

Au cours du traitement thermique, il y a interaction chimique entre l'oxyde de cuivre, éventuellement promu par Ag, Fe, et le soufre. On observe qu'il y a dégagement de SO$_2$ selon une réaction possible :

$$2\,CuO + 3\,S \rightarrow 2\,CuS + SO_2$$

Lorsqu'au moins un agent réducteur a été ajouté avec le soufre lors de l'étape (c), la proportion de soufre éliminé sous forme de $SO_2$ peut préférablement être réduite, comme suit :

$$CuO + HCHO + S \rightarrow CuS + HCOOH$$

ou encore :

$$CuO + HCOOH + S \rightarrow CuS + CO_2 + H_2O$$

Après le traitement thermique (étape d), sous balayage de gaz, la masse d'absorption peut éventuellement être séchée, de préférence sous courant de gaz inerte, par exemple sous courant d'azote, d'hélium, d'argon ou d'un mélange de deux ou plusieurs de ces gaz (en présence ou en absence d'un composé réducteur tels que celui précédement décrit) puis éventuellement refroidie jusqu'à la température ambiante de préférence en présence du courant de gaz précité, avant d'être mise en contact avec le fluide à purifier.

Dans un autre mode de réalisation de l'invention, qui ne constitue pas un mode de réalisation préféré, on peut enfin intercaler une étape (b') de traitement réducteur à l'issue de l'étape (b), dans le cas où le cuivre a été déposé par imprégnation, ou encore à l'issue de l'étape (a) si un oxyde de cuivre a été ajouté par mélange humide avec un support (pas de calcination).

Le traitement réducteur vise alors à transformer l'oxyde de cuivre, éventuellement promu par de l'argent ou encore par du fer, en cuivre métallique. Tout procédé industriel connu de l'Homme de métier peut être utilisé, par exemple la réduction en présence d'un gaz contenant de l'hydrogène ou encore la réduction en présence d'un composé chimique réducteur tel que par exemple l'aldéhydes (par exemple formaldéhyde, acétaldéhyde), l'hydrogène, (l'acide formique), comme indiqué ci-avant en perfectionnement de l'étape (c).

Après réduction d'au moins 50%, préférentiellement 70% et très préférentiellement 85% de l'oxyde de cuivre en cuivre métal, ainsi que éventuellement l'argent métal, (le fer si celui-ci est présent, n'étant que partiellement réduit), le produit obtenu est mis en contact avec du soufre élémentaire par exemple éventuellement au moins en partie sous forme de solution organique ou sans solvant (étape (c)) puis est séché et activé selon l'étape (d).

Au cours de cette étape, le sulfure se forme alors de manière stoechiométrique pour la fraction de cuivre métallique :

$$Cu + S \rightarrow CuS$$

Et comme ci-avant pour la fraction de cuivre sous forme d'oxyde :

$$2\ CuO + 3\ S \rightarrow 2\ CuS + SO_2$$

La masse de captation obtenue à l'issue de l'étape (d) contient 8 à 25% (en poids) de sulfire de cuivre de préférence d'environ 10 à 20% et dans une forme souvent avantageuse 12 à 18%. On préfère habituellement les masses dont au moins 60% et de préférence au moins 80% du cuivre (poids) est à l'état de sulfure.

L'analyse structurale montre que le sulfure se trouve au moins en partie sous la forme de CuS, et généralement la plus grande partie du sulfure est sous cette forme.

D'autres sulfures peuvent être présents, qui ont pour formule $C_xS_y$ où x, y représentent un nombre entier entre 1 et 10.

Les masses de captation du mercure obtenues par le procédé de la présente invention peuvent être utilisées pour purifier des gaz ou encore des liquides contenant du mercure, par exemple des condensats de gaz. Ces masses solides sont habituellement utilisées sous forme de lit fixe à travers lequel on fait passer le fluide à purifier.

Les exemples suivants illustrent l'invention sans en limiter la portée.

## EXEMPLE 1 (comparatif)

On imprègne 1 kg de billes d'alumine autoclavée de 170 $m^2 \times g^{-1}$ de surface spécifique et de volume poreux 1,2 $cm^3 \times g^{-1}$ par 1,2 l d'une solution aqueuse renfermant 370 g de nitrate de cuivre trihydraté $Cu(NO_3)_2, 3H_2O$.

On sèche et on calcine les billes d'alumines ainsi imprégnées durant 7 heures à 400°C sous un courant d'air à une V.V.H. de 5000 $h^{-1}$. On obtient des billes dites de base pour la suite de l'expérimentation. Les billes ainsi obtenues sont dans une autre étape non conforme à l'invention, imprégnées au drageoir, au moyen de 1 l contenant 0,52 l d'eau et 0,48 l d'une solution aqueuse à 20% en poids de sulfure d'ammonium. L'excès de soufre est éliminé par séchage à l'étuve à 200°C durant 10 heures sous courant d'azote (V.V.H. de 5000 $h^{-1}$).

La masse A obtenue renferme du sulfure de cuivre en quantité de 15% par rapport au poids de la masse. L'analyse par diffraction X indique que tout le cuivre est sous forme de sulfure de cuivre. L'analyse chimique montre que le rapport atomique Cu/S est égal à 1,0.

## EXEMPLE 2

Exactement comme dans le premier exemple, on imprègne 1 kg de billes d'alumine de autoclavée 170 $m^2 \times g^{-1}$ de surface spécifique et de volume poreux 1,2 $cm^3 \times g^{-1}$ par 1,2 l d'une solution aqueuse renfermant 370 g de nitrate de cuivre trihydraté. On sèche et on calcine les billes d'alumines ainsi imprégnées durant 7 heures à 400°C sous un courant d'air à une V.V.H. de 5000 h⁻¹.

Ensuite on opère alors conformément à l'invention : les billes ainsi obtenues (et dites de base) sont préchauffées à 70°C puis dans une autre étape (correspondant à l'étape (c) de l'invention) imprégnées au drageoir par un mélange organique de soufre comportant 90 g de soufre micronisé dont les particules ont un diamètre moyen de 2 microns, partiellement solubilisé dans 1,1 litre de toluène à 70°C, l'imprégnation étant réalisée en une seule fois, à chaud sur le support préchauffé à 70°C.

On opère ensuite le séchage à 120°C du produit pour éliminer la plus grande partie du solvant (lequel est condensé puis recyclé), puis à 200°C (traitement thermique de l'étape (d) de l'invention) durant 10 heures sous courant d'azote. On observe qu'il se dégage du $SO_2$.

La masse B obtenue renferme 15% de sulfure de cuivre, comme la masse A. L'analyse par diffraction X montre que tout le cuivre est combiné sous forme de sulfure de cuivre CuS. L'analyse chimique montre que le rapport atomique Cu/S est égal à 1,0.

Exemple 3

La préparation de la masse de captation de mercure est exactement comme dans le deuxième exemple en remplaçant la solution aqueuse renfermant 370 g de nitrate de cuivre trihydraté par 365,3 g de nitrate de cuivre trihydraté et 3,36 g de nitrate d'argent.

La masse C obtenue renferme 15% de sulfure de cuivre plus sulfure d'argent comme les masses A et B précédemment décrit. L'analyse par diffraction X montre que tout le cuivre et tout l'argent dans la masse C se trouvent sous forme de sulfure.

EXEMPLE 4

Les masses de captation du mercure A, B et C obtenues dans les exemples précédents sont testées dans les conditions suivantes. L'appareillage consiste en un réacteur tubulaire en métal dont l'inactivité pour la fixation du mercure a été contrôlée. On introduit dans ce réacteur 30 ml de la masse de captation à tester et on fait passer un courant de gaz naturel renfermant du mercure à une température de 50°C, sous une pression de 40 bars (4,0 MPa) à une V.V.H. de 15000 h⁻¹ (TPN, température et pression normale) soit un débit de 450 l x h⁻¹.

La composition volumique centésimale du gaz naturel à épurer est de 84% en $CH_4$, 0,6% en hydrocarbures ayant 5 atomes de carbone et plus dans leur molécule, le reste étant constitué d'un mélange de $N_2$, $CO_2$, $C_2H_4$, $C_3H_8$ et $C_4H_{10}$. La teneur en mercure dans le gaz à l'entrée du réacteur est de 4500 g/Nm³ (TPN).

La quantité de mercure subsistant dans les gaz après épuration est évaluée par une méthode utilisant le principe de la variation de résistivité d'un film d'or amalgamé par le mercure.

L'efficacité des masses de captation est définie par la relation.

$$E\% = \frac{(\text{teneur en Hg à l'entrée}) - (\text{teneur Hg à la sortie}) \times 100}{(\text{teneur Hg à l'entrée})}$$

L'efficacité dite "initiale" est déterminée après 10 heures de fonctionnement dans les conditions décrites ci-avant.

Des mesures sont ensuite effectuées au bout de 500, 1000 et 1500 h de fonctionnement dans les conditions d'opérations décrites ci-avant.

Les résultats sont donnés dans le tableau I ci-après, ils montrent que les masses obtenues par le procédé de la présente invention possèdent une très bonne efficacité et que de plus leur tenue dans le temps est supérieure à celle de la masse A de comparaison.

EXEMPLE 5

Le produit de départ pour les essais ci-dessous sont les billes dites de base préparées dans les exemples 1, 2 et 3.

Tous les essais ont été réalisés à partir de ces billes.

On rappelle que le procédé développé selon l'invention comprend plusieurs variantes, le schéma de base étant le suivant :

Mélange du support chargé en oxyde de cuivre (c'est-à-dire des billes dites de base) avec du soufre élémentaire en poudre ou en granulés.

Traitement thermique de ce mélange entre 140°C et 150°C en atmosphère inerte par exemple de la vapeur d'eau ou d'azote.

Traitement éventuel complémentaire par imprégnation du produit ainsi obtenu avec de l'acide formique dilué. Eventuellement traitement thermique final (entre 140 et 150°C) en atmosphère inerte d'azote ou de vapeur d'eau.

Tableau I

| | masse A | | masse B | | masse C | |
|---|---|---|---|---|---|---|
| | mercure résiduel $g/Nm^3$ | efficacité % | mercure résiduel $g/Nm3$ | efficacité % | mercure résiduel $g/Nm^3$ | efficacité % |
| temps : 10h | 1 | 99,98 | 0,6 | 99,987 | 0,4 | 99,991 |
| 500h | 0,8 | 99,982 | 0,3 | 99,993 | 0,3 | 99,993 |
| 1000h | 1 | 99,978 | 0,4 | 99,991 | 0,2 | 99,996 |
| 1500h | 1,2 | 99,973 | 0,5 | 99,988 | 0,2 | 99,996 |

Remarque :

a) Lorsque deux dernières étapes sont effectuées avant les deux premières étapes, on obtient sensiblement les mêmes résultats.

b) On obtient aussi des résultats similaires en effectuant simultanément certaines étapes et notamment en réalisant le schéma suivant :

. Mélange du support chargé en oxyde de cuivre (c'est-à-dire des billes dites de base) avec du soufre élémentaire et imprégnation simultanée par de l'acide formique dilué.

. Traitement thermique du mélange obtenue à 140-150°C sous gaz inerte notamment de l'azote .

c) On obtient aussi des résultats de même ordre de grandeur dans le procédé suivant :

. Traitement du support chargé en oxyde de cuivre par un réducteur.

. Mélange du support obtenu chargé en cuivre avec du soufre élémentaire.

. Traitement thermique sous gaz inerte, notamment de l'azote , entre 200 et 220°C.

Un traitement thermique à une température supérieure à 200°C permet d'éliminer la perte au feu à 200°C et de transformer tout le cuivre en sulfure de cuivre.

Deux essais industriels ont également été effectués :

Le support chargé en oxyde de cuivre (billes dites de base) est soigneusement mélangé avec du soufre élémentaire de granulométrie entre 0.5 et 1mm provenant de la Société des Soufres Industriels.

Le mélange ainsi obtenu est traité au rotovapeur pendant 2 heures sous atmosphère d'azote (essai Indust. N2) et un deuxième essai a été effectué sous vapeur d'eau (essai Indust. H2O), dans les conditions opératoires ci-dessus.

Le tableau II ci-après résume tous les résultats.

Tableau II

TABLEAU DES RESULTATS

| | PROCEDES | | | | | | |
|---|---|---|---|---|---|---|---|
| | Comparatif catalyseur traité par (NH4)2S-N2 | Comparatif catalyseur traité par (NH4)2S-H2O | N2 (140-150) | H2O | Indust. H2O (140-150) | Indust. N2 (140-150) | N2 (220) |
| S total (%pds) | 6.62 | 6.4 | 8.7 | 5.8 | 6.2 | 7.2 | 5.3 |
| S en sulfures $S^{2-}$ (%pds) | 5.71 | 4.86 | 6.2 | 3.2 | 3 | 6 | 5.02 |
| S en sulfate $SO_4$ (%pds) | 0.005-0.2 | 0.6-0.5 | 0.85-0.6 | 1.26 | 1.86 | 0.5 | 0.2 |
| perte au feu 'AF sous $N_2$ à 200°C (pds%) | 1.51 | 3.15 | 0.5 | 2.8 | 3 | 1 | 0 |
| (1) | CuS | CuS | CuS+CuO | CuS+CuO | CuS+CuO | CuS+CuO | CuS |

Remarque : (1) Présence de CuS et/ou CuO – Analyse par diffraction X.

## EXEMPLE 6

Les analyses par diffraction X montrent que l'oxyde de cuivre n'est pas transformé en totalité en sulfure de cuivre lors de traitement thermique à 140 - 150°C. La moitié seulement de l'oxyde a été transformée.

A. Pour compléter cette transformation, l'essai suivant a été réalisé:

1) Le catalyseur obtenu après mélange avec le soufre et traitement thermique sous azote (ou vapeur d'eau) a été imprégné avec un mélange à 15% d'acide formique. La totalité du volume poreux, soit environ 60 cc pour 100 g de catalyseur, a été imprégné.

8

2) Le catalyseur ainsi imprégné a été traité à 140 - 150°C sous azote (ou vapeur d'eau).

Les résultats par analyse diffraction X sont concluants : la totalité de l'oxyde de cuivre a été transformée en sulfure de cuivre.

B. Ce traitement a été appliqué à l'échelle industrielle avec les conditions suivantes :

Le catalyseur est imprégné à 20 % de son volume poreux par une solution à 20 % d'acide formique, soit 120 l d'acide formique dilué par tonne de catalyseur.

Le catalyseur a été ensuite traité sous azote (ou vapeur d'eau) à 140-150°C dans un four du type Louisville.

Les résultats sont identiques aux essais en laboratoire.

## EXEMPLE 7

Les essais suivants ont été ensuite réalisés (au laboratoire) :

- imprégnation du support chargé en oxyde de cuivre (billes dites de base) par une solution d'acide formique diluée. La quantité d'acide formique utilisée est la quantité stoechiométrique.
- traitement à 140-150°C sous azote ou vapeur d'eau.
- mélange du produit obtenu contenant du cuivre métallique avec du soufre élémentaire.
- traitement thermique à 140-150°C sous azote ou vapeur d'eau.

Les résultats sont identiques au essais précédents, c'est-à-dire que l'oxyde de cuivre de départ est totalement transformé en sulfure de cuivre.

Le procédé de préparation de la masse de captation du mercure selon la présente invention, outre l'obtention d'une masse solide ayant une meilleure tenue dans le temps, présente également des principaux avantages suivants :

- Possibilité d'incorporer l'agent de sulfuration à une température relativement basse, habituellement inférieure à 100°C
- Possibilité de transformer le précurseur de la masse de captation du mercure et/ou d'arsenic résultant de l'incorporation du soufre élémentaire, en une masse de captation active, à une température relativement basse habituellement inférieure à 250°C
- Utilisation d'un agent de sulfuration non toxique et n'ayant aucune mauvaise odeur.

## Revendications

1. Procédé de préparation d'une masse solide de captation du mercure comprenant un support ou dispersant minéral solide, essentiellement du cuivre et du soufre au moins en partie sous forme de sulfure de cuivre, caractérisé en ce qu'il comporte les étapes suivantes :

   a) on incorpore au moins un composé de cuivre, autre qu'un sulfure, à un support ou dispersant minéral solide,

   b) dans l'hypothèse où ledit composé n'est pas un oxyde de cuivre, on calcine le produit obtenu à l'étape (a) de manière à transformer au moins en partie le ou les composés de cuivre qu'il contient en oxyde de cuivre ($CuO$ et/ou $Cu_2O$),

   c) on met en contact le produit obtenu à l'étape (b), ou à l'étape (a) s'il n'y a eu d'étape (b), avec du soufre élémentaire,

   d) on soumet le produit résultant de l'étape (c), à un traitement thermique, en atmosphère non oxydante, sous balayage de gaz, à une température et pendant un temps suffisants pour permettre la formation de sulfure du ou des métaux présents.

2. Procédé selon la revendication 1 caractérisé en ce que à l'étape (c) le soufre élémentaire est utilisé au moins en partie en solution dans un solvant organique.

3. Procédé selon la revendication 1 dans lequel à l'étape (d) on combine au moins 50% de cuivre sous forme de sulfure de cuivre $Cu_xS_y$ où x et y sont chacun un nombre entier de 1 à 10.

4. Procédé selon l'une des revendications 1 à 3 caractérisé en ce que le support ou dispersant minéral solide est choisi dans le groupe formé par le charbon, le charbon actif, le coke, la silice, le carbure de silicium, le gel de silice, les silicates synthétiques ou naturels, les argiles, les terres à diatomées, les terres à foulon, le kaolin, la bauxite, les oxydes inorganiques réfractaires tels que par exemple l'alumine, l'oxyde de titane, la zircone, la magnésie, les silices-alumines, les silices-magnésies et les silices-zircones, les mélanges alumines-oxyde de bore, les aluminates, les silico-aluminates, les alumino-silicates zéolitiques cristallins, synthétiques ou naturels, par exemple les mordénites, les faujasites, les offrétites, les érionites, les ferriérites, les zéolites ZSM5 et ZSM11, les mazzites, et les ciments.

5.  Procédé selon l'une des revendications 1 à 4 dans lequel à l'étape (d), le traitement thermique est réalisé sous atmosphère d'au moins un gaz choisi parmi les gaz inertes et la vapeur d'eau.

6.  Procédé selon l'une des revendications 1 à 5 dans lequel on utilise au cours de l'étape (a) une solution aqueuse de nitrate de cuivre.

7.  Procédé selon l'une des revendications 1 à 6 dans lequel au cours de l'étape (b) le produit résultant de l'étape (a) est calciné à une température de 200 à 1000 °C, sous un courant de gaz ayant une V.V.H. d'environ 100 à environ 20000 h$^{-1}$, pendant environ 0,5 à environ 24 heures.

8.  Procédé selon l'une des revendications 1 à 7, caractérisé en ce que à l'étape (c), le produit résultant de l'étape (b) est imprégné avec une solution organique de soufre ou avec du soufre à l'état solide ou avec du soufre à l'état de vapeur que l'on condense sur le support.

9.  Procédé selon l'une des revendications 1 à 8 dans lequel au cours de l'étape (c) le soufre élémentaire est utilisé en solution dans au moins un solvant organique de préférence choisi dans le groupe formé par le toluène, le benzène, l'alcool méthylique, l'acétone, le sulfure de carbone, une essence légère bouillant entre environ 60 et 95 °C, une essence de type hexane bouillant entre environ 63 et 68 °C, une essence de type F bouillant entre environ 100 et 160 °C (et renfermant en volume 10 à 20 % d'hydrocarbures aromatiques) et une essence du type "White Spirit" bouillant entre environ 150 et 250 °C (et renfermant en volume 14 à 22 % d'hydrocarbures aromatiques).

10. Procédé selon l'une des revendications 1 à 9 dans lequel on utilise une quantité de soufre rapportée aux métaux actifs présents dans la dite masse solide, telle que le rapport atomique soufre sur métaux présents soit d'environ 0,8:1 à 2:1.

11. Procédé selon la revendication 10 dans lequelle ledit rapport atomique est d'environ 0,9:1 à 1,7:1.

12. Procédé selon l'une des revendications 1 à 11 dans lequel au cours de l'étape (c) le produit est traité en milieu réducteur.

13. Procédé selon l'une des revendications 1 à 11 dans lequel au cours d'une étape (b') intercalée entre l'étape (b) - ou l'étape (a) s'il n'y a pas d'étape (b) - et l'étape (c), on fait subir un traitement réducteur au produit obtenu à l'étape (b) - ou respectivement (a), de façon à transformer au moins 50% des oxydes de métaux actifs en métaux élémentaires.

14. Procédé selon l'une des revendications 12 et 13 dans lequel le traitement réducteur est effectué à l'aide d'un composé choisi dans le groupe constitué par l'hydrogène, les aldéhydes, l'acide formique et l'hydrazine.

15. Procédé selon la revendication 5 dans lequel on ajoute au dit gaz, de 1 à 5 % (volume) d'hydrogène.

16. Procédé selon la revendication 15 dans lequel lorsque le dit gaz est la vapeur d'eau, on ajoute de l'hydrogène avec un rapport $H_2/H_2O$ supérieur à 0,1 % (volume).

17. Procédé selon l'une des revendications 1 à 16 dans lequel le traitement thermique de l'étape (d) est effectué à une température d'environ 100 à 250 °C, avec une V.V.H. du gaz d'environ 100 à 10000 h$^{-1}$ et durant environ 0,5 à 24 heures.

18. Procédé selon la revendication 17 dans lequel le traitement thermique est effectué entre 120 et 230 °C.

19. Procédé selon l'une des revendications 1 à 18 dans lequel on incorpore en outre au cours de l'étape (a) un composé d'argent.

20. Procédé selon l'une des revendications 1 à 20 comprenant une proportion de sulfure de cuivre, représentant environ 8 à 25 % en poids du poids de ladite masse, et dans laquelle le rapport atomique S/Cu est compris entre 0,8:1 et 2:1.

**Patentansprüche**

1. Verfahren zum Herstellen einer Feststoffmasse für den Quecksilbereinfang, einen Träger oder ein festes mineralisches Dispergens, im wesentlichen Kupfer und Schwefel, wenigstens zum Teil in Form von Kupfersulfid, dadurch gekennzeichnet, daß es die folgenden Stufen umfasst:

   a) man setzt wenigstens eine Kupferverbindung außer einem Sulfid, einem Träger oder festen mineralischen Dispergens zu,

   b) unter der Annahme, daß diese Verbindung nicht ein Kupferoxid ist, kalziniert man das in der Stufe (a) erhaltene Produkt derart, daß wenigstens zum Teil das oder die Kupferverbindungen, die es enthält, in Kupferoxid (CuO und/oder $Cu_2O$) umgeformt werden,

   c) man kontaktiert das in der Stufe (b) oder der Stufe (a), wenn es keine Stufe (b) gegeben hat, erhaltene Produkt mit elementarem Schwefel,

   d) man setzt das aus der Stufe (c) stammende Produkt einer thermischen Behandlung in nicht oxidierender Atmosphäre unter Gasspülung bei einer Temperatur und während einer Zeit, die ausreichend sind, aus, um die Bildung von Sulfid des oder der vorhandenen Metalle zu ermöglichen.

2. Verfahren nach Anspruch 1, dadurch gekennzeichnet, daß in der Stufe (c) der elementare Schwefel wenigstens zum Teil in Lösung in einem organischen Lösungsmittel verwendet wird.

3. Verfahren nach Anspruch 1, bei dem in Stufe (d) man wenigstens 50 % Kupfer in Form von Kupfersulfid $Cu_xS_y$ kombiniert, wo x und y je eine ganze Zahl zwischen 1 und 10 sind.

4. Verfahren nach einem der Ansprüche 1 bis 3, dadurch gekennzeichnet, daß der Träger oder das feste mineralische Dispergens gewählt ist aus der Gruppe, welche gewählt ist durch Kohle, Aktivkohle, Koks, Siliziumoxid, Siliziumkar- bid, Siliziumoxidgel, synthetische oder natürliche Silika- te, Tone, Diatomeenerden, Fullererden, Kaolin, Bauxit, anorganische feuerfeste Oxide, wie beispielsweise Aluminiumoxid, Titanoxid, Zirkoniumoxid, Magnesiumoxid, Silizium- oxide-Aliminiumoxide, Siliziumoxide-Magenesiumoxide und Siliziumoxide-Zirkonoxide, Gemische von Alumiumoxiden-Boroxid, Aluminaten, Silikoaluminaten, zeolythischen kristallinen Aluminosilikate, seien sie synthetische oder natürliche, beispielsweise Mordenite, Faujasite, Offretite, Erionite, Ferrierite, ZSM5- und ZSM11-Zeolithe, Mazzite und Zemente.

5. Verfahren nach einem der Ansprüche 1 bis 4, bei dem in Stufe (d) die thermische Behandlung durchgeführt wird unter einer Atmosphäre wenigstens eines Gases, das gewählt ist aus den inerten Gasen und dem Wasserdampf.

6. Verfahren nach einem der Ansprüche 1 bis 5, bei dem man während der Stufe (a) eine wässrige Lösung von Nitrat verwendet.

7. Verfahren nach einem der Ansprüche 1 bis 6, bei dem während der Stufe (b) das aus der Stufe (a) stammende Produkt bei einer Temperatur zwischen 200 bis 1000°C unter einem Gasstrom mit einer stündlichen Raumgeschwindigkeit (VVH) von etwa 100 bis etwa 20000 $h^{-1}$, während 0,5 bis etwa 24 Stunden kalziniert wird.

8. Verfahren nach einem der Ansprüche 1 bis 7, dadurch gekennzeichnet, daß in der Stufe (c) das aus der Stufe (b) stammende Produkt imprägniert wird mit einer organischen Schwefellösung oder mit Schwefel im festen Zustand oder mit Schwefel im Dampfzustand, den man auf dem Träger kondensiert.

9. Verfahren nach einem der Ansprüche 1 bis 8, bei dem während der Stufe (c) der elementare Schwefel in Lösung in wenigstens einem organischen Lösungsmittel verwendet wird, das gewählt ist aus der Gruppe, die gebildet wird durch Tolluol, Benzol, Methylalkohol, Azeton, Kohlenstoffdisulfid, einem leichten Benzin, das zwischen etwa 60 und 95°C siedet, einem Benzin von Typ Hexan, das zwischen etwa 63 und 68°C siedet, einem Benzin vom Typ F, das zwischen etwa 100 und 160°C siedet (und im Volumen-% 10 bis 20 % aromatische Kohlenwasserstoffe umfasst) und einem Benzin vom Typ "White Spirit", das zwischen etwa 150 und 250°C siedet (und 14 bis 22 Volumen-% aromatische Kohlenwasserstoffe umfasst).

10. Verfahren nach einem der Ansprüche 1 bis 9, bei dem man eine Schwefelmenge verwendet, die in einem Verhältnis zu den in dieser festen Masse vorhandenen aktiven Metallen derart steht, daß das Atomverhältnis von Schwefel zu den vorhandenen Metallen bei etwa 0,8:1 bis 2:1 beträgt.

**11.** Verfahren nach Anspruch 10, bei dem dieses Atomverhältnis etwa 0,9:1 bis 1,7:1 beträgt.

**12.** Verfahren nach einem der Ansprüche 1 bis 11, bei dem während der Stufe (c) das Produkt in reduzierender Umgebung behandelt wird.

**13.** Verfahren nach einem der Ansprüche 1 bis 11, bei dem während einer Stufe (b'), die zwischen die Stufe (b) - oder die Stufe (a), wenn es die Stufe (b) nicht gibt - und die Stufe (c) zwischengeschaltet ist, man das in der Stufe (b) - oder beziehungsweise Stufe (a) erhaltene Produkt einer reduzierenden Behandlung derart aussetzt, daß wenigstens 50 % der Oxide aktiver Metalle in elementare Metalle umgeformt werden.

**14.** Verfahren nach einem der Ansprüche 12 bis 13, bei dem die reduzierende Behandlung durchgeführt wird mit Hilfe einer Verbindung, die gewählt ist aus der Gruppe, die gebildet ist durch Wasserstoff, Aldehyde, Ameisensäure und Hydrazin.

**15.** Verfahren nach Anspruch 5, bei dem man diesem Gas 1 bis 5 (Volumen-)% Wasserstoff zusetzt.

**16.** Verfahren nach Anspruch 15, bei dem, wenn dieses genannte Gas Wasserdampf ist, man Wasserstoff mit einem Verhältnis $H_2/H_2O$ von mehr als 0,1 (Volumen-)% zusetzt.

**17.** Verfahren nach einem der Ansprüche 1 bis 16, bei dem die thermische Behandlung der Stufe (d) bei einer Temperatur von etwa 100 bis 250°C mit einer stündlichen Raumgeschwindigkeit (VVH) des Gases von etwa 100 bis $10000h^{-1}$ und während etwa 0,5 bis 24 Stunden durchgeführt wird.

**18.** Verfahren nach Anspruch 17, bei dem die thermische Behandlung zwischen 120 und 230°C vorgenommen wird.

**19.** Verfahren nach einem der Ansprüche 1 bis 18, bei dem man im übrigen während der Stufe (a) eine Silberverbindung einarbeitet.

**20.** Verfahren nach einem der Ansprüche 1 bis 20, einen Anteil von Kupfersulfid umfassend, der etwa 8 bis 25 Gew.-% des Gewichtes dieser Masse ausmacht und bei dem das Atomverhältnis S/Cu zwischen 0,8:1 und 2:1 beträgt.

## Claims

**1.** A solid mercury recovery mass comprising a solid mineral dispersant or support, essentially copper and sulphur at least partly in the form of copper sulphide, characterised in that it comprises the following stages:

a) at least one copper compound other than a sulphide is incorporated into a solid mineral dispersant or support,

b) on the hypothesis that the said compound is not a copper oxide, the product obtained in stage (a) is calcined in such a way as to convert at least partly the copper compound(s) which it contains into copper oxide ($CuO$ and/or $Cu_2O$),

c) the product obtained in stage (b) or in stage (a) if there has not been a stage (b) is brought into contact with elementary sulphur,

d) the product resulting from stage (c) is subjected to a heat treatment in a non-oxidising atmosphere accompanied by scavenging with gas, at a temperature and for a time sufficient to allow the formation of sulphide of the metal or metals present.

**2.** Process according to Claim 1, characterised in that in stage (c) the elementary sulphur is used at least partly in solution in an organic solvent.

**3.** Process according to Claim 1 in which in stage (d) at least 50% of copper in the form of copper sulphide $Cu_x S_y$ is combined, x and y each being a whole number between 1 and 10.

**4.** Process according to Claim 1 characterised in that the solid mineral dispersant or support is chosen from the group formed by carbon, activated carbon, coke, silica, silicon carbide, silica gel, the synthetic or natural silicates, the clays, diatomaceous earths, fuller's earths, kaolin, bauxite, refractory inorganic oxides such as for example alumina, titanium oxide, zirconia , magnesia , the silica-aluminas, the silica-magnesias and the silica-zirconia, the boron oxide alumina mixtures, the aluminates, the silico-aluminates, the synthetic or natural zeolitic crystalline alumino-silicates, for example the mordenites, faujasites, offretites, erionites, ferrierites, zeolites ZSM5 and ZSM11, the mazzites and the cements.

5. Process according to Claim 1 , in which in stage (d) the heat treatment is conducted in an atmosphere of at least one gas chosen from among the inert gases and water vapour.

6. Process according to Claim 1 in which during the course of stage (a) an aqueous solution of copper nitrate is used.

7. Process according to Claim 1 in which during the course of stage (b) the product resulting from stage (a) is calcined at a temperature of 200 to 1000°C in a current of gas which has a VVH of approx. 100 to approx. 20,000 $h^{-1}$ for approx. half to approx. 24 hours.

8. Process according to Claim 1 , characterised in that in stage (c) the product resulting from stage (b) is impregnated with an organic solution of sulphur or with sulphur in the solid state or with sulphur in the vapour state, condensed on the support.

9. Process according to Claim 1 in which during the course of stage (c) the elementary sulphur is used in solution in at least one organic solvent preferably chosen from the group constituted by toluene, benzene, methyl alcohol, acetone, carbon disulphide, a light fuel boiling between approx. 60 and 95°C, a hexane type fuel boiling between 63 and 68°C, a type F fuel boiling between approx. 100 and 160°C (and containing by volume 10 to 20% aromatic hydrocarbons) and a "white spirit" type of fuel boiling between approx. 150 and 250°C (and containing by volume 14 to 22% aromatic hydrocarbons.

10. Process according to Claim 1 , in which a quantity of sulphur is used which, related to the active metals present in the said solid mass, is such that the atomic ratio of sulphur to metals present is approx. 0.8:1 to 2:1.

11. Process according to Claim 10 in which the said atomic ratio is approx. 0.9:1 to 1.7:1.

12. Process according to Claim 1 in which during the course of stage (c) the product is treated in a reducing medium.

13. Process according to Claim 1 in which during the course of a stage (b') incorporated between stage (b) - or stage (a) if there has not been a stage (b) - and stage (c), the product obtained in stage (b) - or respectively (a), is subjected to a reducing treatment in order to convert at least 50% of the active metal oxides to elementary metals.

14. Process according to Claim 12 in which the reducing treatment is performed by means of a compound chosen from the group constituted by hydrogen, the aldehydes, formic acid and hydrazine.

15. Process according to Claim 5 in which 1 to 5% by volume of hydrogen is added to the said gas.

16. Process according to Claim 15 in which, when the said gas is water vapour, hydrogen is added at a ratio $H_2:H_2O$ of more than 0.1% by volume.

17. Process according to Claim 1 to , in which the heat treatment of stage (d) is carried out at a temperature of approx. 100 to 250°C with a gas VVH of approx. 100 to 10,000 $h^{-1}$ and for approx. half to 24 hours.

18. Process according to Claim 17, in which the heat treatment is carried out at between 120 and 230°C.

19. Process prepared according to Claim 1 in which a silver compound is also incorporated during the course of stage (a).

20. Process according to Claim 1 comprising a proportion of copper sulphide representing approx. 8 to 25% by weight of the weight of the said mass and in which the atomic ratio S:Cu is comprised between 0.8:1 and 2:1.